# EUROPEAN PATENT SPECIFICATION

(11) **EP 3 311 676 B1**
(45) Date of publication and mention of the grant of the patent: **23.08.2023**
(21) Application number: 16811661.4
(22) Date of filing: 15.06.2016
(51) Int. Cl.: A23G 1/00, A23D 9/00, A23G 1/30, A23G 1/36

(54) **NON-TEMPERED TYPE CHOCOLATE**
UNGEHÄRTETE SCHOKOLADE
CHOCOLAT DE TYPE NON DÉNATURÉ

(30) Priority: 17.06.2015 JP 2015121676
(43) Date of publication of application: 25.04.2018
(73) Proprietor: The Nisshin OilliO Group, Ltd., Tokyo 104-8285 (JP)
(72) Inventor: OONISHI, Kiyomi, Yokosuka-shi Kanagawa 239-0832 (JP); AIBARA, Tomohiro, Yokosuka-shi Kanagawa 239-0832 (JP); MURAYAMA, Noriko, Yokosuka-shi Kanagawa 239-0832 (JP); TSUKIYAMA, Muneo, Yokosuka-shi Kanagawa 239-0832 (JP); UEHARA, Hidetaka, Yokosuka-shi Kanagawa 239-0832 (JP)
(74) Representative: Dennemeyer & Associates S.A.
(86) International application number: PCT/JP2016/067833
(87) International publication number: WO 2016/204187

(56) References cited:
- EP-A1- 3 305 085
- EP-A1- 3 369 323
- WO-A1-2013/147279
- WO-A1-2013/168554
- WO-A1-2013/168554
- WO-A1-2015/029454
- WO-A1-2015/029454
- WO-A1-2015/033568
- WO-A1-2015/033568
- WO-A1-2015/040856
- WO-A1-2017/057131
- JP-A- H05 184 297
- JP-A- H05 184 297
- JP-A- H08 501 701
- US-A- 5 275 835

## Description

### TECHNICAL FIELD

The present invention relates to non-tempered chocolate having excellent luster.

### BACKGROUND ART

In general, chocolate is categorized into a temper type and a non-temper type. In the tempered chocolate, fats and oils forming the chocolate mainly contain cacao butter and/or a cacao butter substitute (CBE) having a symmetrical triacylglycerol structure, the cacao butter substitute being similar to the cacao butter. A crystal structure of the symmetrical triacylglycerol contained in the tempered chocolate needs to be adjusted to a V-type. For this reason, in manufacturing of the tempered chocolate, an extremely-complicated process called "tempering" is necessary.

On the other hand, in the non-tempered chocolate, fats and oils forming the chocolate exhibit melting properties similar to those of the cacao butter. However, these fats and oils have a fat-and-oil structure totally different from that of the cacao butter. The fats and oils forming the non-tempered chocolate are broadly divided into a lauric acid type and a non-lauric acid type. Any of the lauric acid type and the non-lauric acid type exhibits low compatibility with the cacao butter. However, any of these types is less expensive than the cacao butter. Moreover, complicated tempering is not necessary for the non-tempered chocolate, leading to favorable workability. Thus, such chocolate has been broadly used in a confectionery/bread production area.

Among the fats and oils (hard butter) mainly forming the non-tempered chocolate, hard butter obtained by fully hydrogenerating a hydrogenated component (palm kernel stearin) obtained by fractionation of palm kernel oil has been typically known as lauric acid hard butter. The hard butter of this kind exhibits extremely-sharp melting properties. However, such hard butter exhibits extremely-low compatibility with the cacao butter. For this reason, in the chocolate using the lauric acid hard butter, the content of the cacao butter needs to be as small as possible. Thus, the chocolate using such hard butter has poor cacao flavor. Moreover, such chocolate has disadvantages that the luster of the chocolate is deteriorated over time and that the flavor is extremely deteriorated when hydrolysis occurs in a poor storage state.

For improving these advantages of the lauric acid hard butter, hard butter obtained by interesterification of lauric-based fats and oils and non-lauric-based fats and oils has been developed (see JP-A-2008-182961). However, chocolate using the hard butter described in JP-A-2008-182961 has a disadvantage that the luster of the chocolate is deteriorated over time.

Among the fats and oils (the hard butter) mainly forming the non-tempered chocolate, the non-lauric acid hard butter is also called "trans acid hard butter." Fats and oils obtained from isomerized hydrogenated liquid oil such as low-melting-point palm olein or soy bean oil and a high melting point component or an intermediate melting point component obtained by further fractionation of the isomerized hydrogenated fats and oils as necessary have been typically known as the trans acid hard butter. The non-lauric acid hard butter exhibits a little less sharp melting properties than those of the lauric acid hard butter. However, the non-lauric acid hard butter exhibits better compatibility with the cacao butter than that of the lauric acid hard butter. In the chocolate using the non-lauric acid hard butter, relatively more cacao butter can be blended as compared to the chocolate using the lauric acid hard butter. However, the non-lauric acid hard butter contains a large amount of trans fatty acid. Thus, the use of such hard butter has been avoided since an adverse effect of the trans fatty acid on health has been recognized.

Hard butter containing certain amounts of SSS, S2U, SU2, and UUU as specific triglyceride and having a specific mass ratio of SUS/SSU and a specific mass ratio of St/P in a constituent fatty acid composition has been developed as non-lauric acid hard butter containing substantially no trans fatty acid (see JP-A-2009-284899). However, chocolate using the hard butter described in JP-A-2009-284899 also has a disadvantage that the luster of the chocolate is deteriorated over time. In addition, hard butte containing triglyceride and chocolate using the same is disclosed in JP-A-H05-184297, oil or fat for imparting a milk-like flavor to a food is disclosed in WO 2015/040856A1, flavored confectionery compositions containing certain reduced calorie cocoa butter substitute fats are disclosed in US 5275835A and chocolate containing fat including tricaprin is disclosed in WO 2015/033568A1. Further, chocolate containing fats including triacyl-glycerol containing constituent fatty acid having 6-10 carbon atoms is disclosed in WO 2015/029454A1, chocolate having certain amount of MMM is disclosed in EP 3305085A1, oil based food containing L2M and LM2 is disclosed in EP 3369323A1, and low trans-fatty acid and non-lauric acid oil and fat composition is disclosed in WO 2013/168554A1.

### CITATION LIST

### PATENT LITERATURE

PATENT LITERATURE 1: JP-A-2008-182961
PATENT LITERATURE 2: JP-A-2009-284899
PATENT LITERATURE 3: JP-A-H05-184297
PATENT LITERATURE 4: WO 2015/040856A1
PATENT LITERATURE 5: US 5275835A
PATENT LITERATURE 6: WO 2015/033568A1
PATENT LITERATURE 7:WO 2015/029454A1
PATENT LITERATURE 8: EP 3305085A1
PATENT LITERATURE 9: EP 3369323A1PATENT LITERATURE 10: WO 2013/168554A1

### SUMMARY OF THE INVENTION

### PROBLEMS TO BE SOLVED BY THE INVENTION

An object of the present invention is to provide non-tempered chocolate having excellent luster with less temporal luster deterioration.

### SOLUTION TO THE PROBLEMS

The inventors of the present invention have well studied how to solve the above-described problems. As a result, it has been found that by adding a small amount of triacylglycerol (MMM) having three fatty acid (M) molecules of 6 to 10 carbons that are ester-bonded to the glycerol into the fats and oils of the non-tempered chocolate, the non-tempered chocolate having excellent luster with less temporal luster deterioration is obtained. This led to the completion of the present invention.

The present invention, therefore, provides chocolate, as follows:
Non-tempered chocolate including a MMM, a content of which is 0.01 mass% or greater and less than 5 mass% in fats and oils of the chocolate, wherein the M means a fatty acid of 6 to 10 carbons, and the MMM means a triacylglycerol having the three M molecules bonded to a single glycerol molecule.

In the non-tempered chocolate, a total content of L2M and LM2 in the fats and oils is 0.01 to 10 mass%, wherein the L means a saturated fatty acid of 16 to 24 carbons, the L2M means a triacylglycerol having the two L molecules and the single M molecule, the molecules being bonded to a single glycerol molecule, and the LM2 means a triacylglycerol having the single L molecule and the two M molecules, the molecules being bonded to a single glycerol molecule.

In addition, a mass ratio (L2M/LM2) of a content of the L2M in the fats and oils to a content of the LM2 in the fats and oils is 0.05 to 4.5.

In the present invention, the fats and oils can contain interesterified fats and oils.
The non-tempered chocolate of the present invention can comprise chocolate additive comprising 2 to 70 mass% of MMM; and 20 to 98 mass% of L2M and LM2.

Further, in the non-tempered chocolate of the present invention, the chocolate additive contains interesterified fats and oils contain constituent fatty acids; and of a total amount of the constituent fatty acids, fatty acids of 6 to 10 carbons account for 25 to 65 mass%, and saturated fatty acids of 16 to 24 carbons account for 35 to 75 mass%.

### DESCRIPTION OF THE EMBODIMENTS

According to the present invention, non-tempered chocolate having excellent luster with less temporal luster deterioration can be provided.

Chocolate of the present invention will be described in order as follows.

As described herein, chocolate is not limited to the chocolate defined in "Fair Competition Codes concerning Labeling on Chocolates" (Japan Chocolate Industry Fair Trade Conference) or provisions in laws and regulations and the like. That is, the main raw material of the chocolate according to the present invention is edible fats and oils and saccharides. Cacao components (cacao mass, cocoa powder, and the like), dairy products, flavors, emulsifiers, and the like are added to the main raw material as necessary. Such chocolate is manufactured through some or all of chocolate manufacturing processes (mixing process, refining process, conching process, molding process, cooling process, and the like). Also, the chocolate according to the present invention includes white chocolate and color chocolate as well as dark chocolate and milk chocolate.

The chocolate according to the present invention preferably contains 25 to 65 mass% of fats and oils. The content of fats and oils in the chocolate according to the present invention is more preferably 28 to 55 mass%, and much more preferably 30 to 45 mass%. It is noted that the fats and oils contained in the chocolate according to the present invention include fats and oils (cocoa butter, milk fat, and the like) derived from an oil-containing raw material (cacao mass, cocoa powder, whole milk powder, and the like), other than the fats and oils to be formulated. For example, in general, the content of fats and oils (cocoa butter) in cacao mass is 55 mass% (oil content: 0.55); the content of fats and oils (cocoa butter) in cocoa powder is 11 mass% (oil content: 0.11); and the content of fats and oils (milk fat) in whole milk powder is 25 mass% (oil content: 0.25). Therefore, the content of fats and oils in chocolate comes to be a sum of the values each obtained by multiplying a formulated amount (mass%) of each raw material in chocolate by the oil percentage.

The fats and oils in the chocolate of the present invention contain 0.01 mass% or greater of and less than 5 mass% of MMM. Hereinafter, M and the MMM mean as follows. The M is a fatty acid of 6 to 10 carbons. The MMM is a triacylglycerol having three M molecules with an ester-bond to a single glycerol molecule. These three fatty acids (M) of the MMM may be all the same, or may include different fatty acids. Further, the MMM may be a mixture of multiple different compounds. Examples of such a mixture can include a mixture of trioctanoyl glycerol and tridecanoyl glycerol. The fatty acid constituting the MMM and having 6 to 10 carbons is preferably linear saturated fatty acid. The content of the MMM in the fats and oils of the chocolate is preferably 0.04 to 4 mass%, more preferably 0.1 to 3.6 mass%, much more preferably 0.3 to 3.2 mass%, and most preferably 0.5 to 3 mass%. When the content of the MMM in the fats and oils of the chocolate falls within the above-described range, the chocolate has excellent luster.

The fats and oils in the chocolate of the present invention contain the above-described MMM. Of the total amount of constituent fatty acids contained in the MMM, fatty acids of 6 carbons preferably account for 10 mass% or less, more preferably 5 mass% or less. Of the total amount of the constituent fatty acids contained in the above-described MMM, fatty acids of 10 carbons account for preferably 10 mass% or greater, more preferably 20 to 100 mass%, much more preferably 40 to 80 mass%.

An example of a preferred embodiment of the chocolate of the present invention is a chocolate containing 0.01 mass% or greater of and less than 5 mass% of the following MMM in fats and oils of the chocolate. Of the total amount of constituent fatty acids contained in the MMM, the constituent fatty acid accounting for 95 mass% or greater is octanoic acid (8 carbons) and/or decanoic acid (10 carbons). Further, a mass ratio between the octanoic acid and the decanoic acid as constituent fatty acid is preferably 100:0 to 10:90, and more preferably 80:20 to 20:80.

The MMM contained in the fats and oils of the chocolate of the present invention can be manufactured using a typical known method. For example, the MMM can be manufactured by heating fatty acids of 6 to 10 carbons and glycerol to 120 to 180°C, to perform dehydration condensation. Such condensation reaction is preferably performed under reduced pressure. A catalyst can be used for the above-described condensation reaction. However, it is preferred to use no catalyst in the above-described condensation reaction.

The fats and oils in the chocolate of the present invention preferably contain 0.01 to 10 mass% of L2M and LM2 in total. Hereinafter, L, the L2M, and the LM2 mean as follows. The L is a saturated fatty acid of 16 to 24 carbons. The L2M is a triacylglycerol having the two L molecules and the single M molecule, the molecules being bonded to a single glycerol molecule. The LM2 is a triacylglycerol having the single L molecule and the two M molecules, the molecules being bonded to a single glycerol molecule. The L is preferably a saturated fatty acid of 16 to 20 carbons, and more preferably a saturated fatty acid of 16 to 18 carbons. Also, the L is preferably linear saturated fatty acid. The fats and oils in the chocolate of the present invention more preferably contain, in total, 0.1 to 6 mass% of the L2M and the LM2, much more preferably 0.5 to 5 mass%, and most preferably 1 to 4 mass%. When the total content (hereinafter also referred to as "L2M+LM2") of the L2M and the LM2 in the fats and oils of the chocolate falls within the above-described range, the chocolate has less temporal luster deterioration.

Regarding the above-described L2M and the LM2, the mass ratio (L2M/LM2) of the content of the L2M in the fats and oils of the chocolate to the content of the LM2 in the fats and oils of the chocolate is preferably 0.05 to 4.5. The L2M/LM2 is more preferably 0.3 to 3, and much more preferably 0.55 to 2.5. When the L2M/LM2 falls within the above-described range, the chocolate has much less temporal luster deterioration.

Of the total amount of M in constituent fatty acids of the above-described L2M and the LM2, fatty acids of 6 carbons preferably account for 10 mass% or less, more preferably 5 mass% or less. Of the total amount of the M in the constituent fatty acids of the above-described L2M and the LM2, fatty acids of 10 carbons preferably 10 mass% or greater, more preferably 20 to 100 mass%, much more preferably 40 to 100 mass%, most preferably 60 to 100 mass%.

As the L2M and the LM2 in the fats and oils of the chocolate of the present invention, may be used fats and oils containing L2M and LM2 (fats and oils containing, in total, 40 mass% or greater, preferably 60 mass% or greater, of the L2M and the LM2) which can be manufactured using a typical known method. For example, the fats and oils containing the L2M and the LM2 may be fats and oils obtained by fractionation after interesterification of a fat-and-oil mixture of 10 to 65 parts by mass (more preferably 20 to 55 parts by mass) of MMM and 35 to 90 parts by mass (more preferably 45 to 80 parts by mass) of later-described other types of fats and oils. The other types of fats and oils as described herein are fats and oils having an iodine value of 5 or less and containing, in the constituent fatty acids, 90 mass% or greater of saturated fatty acid having 16 carbons or more. Examples of such fats and oils may include fully hydrogenated oil obtained from a raw material such as rapeseed oil, soy bean oil, or palm oil. Alternatively, the fats and oils containing the L2M and the LM2 may be fats and oils obtained as follows: after a fat-and-oil mixture of MMM and fats and oils (e.g., rapeseed oil, soy bean oil, or palm oil) containing, in constituent fatty acids, 90 mass% or greater of saturated fatty acid having 16 carbons or more has been subjected to interesterification, the resultant is fully hydrogenated and fractionated.

Typical known methods are applicable as hydrogenation reaction, interesterification reaction, and fractionation. As the interesterification reaction, is applicable any method of chemical interesterification using a synthetic catalyst such as sodium methoxide and enzymatic interesterification using lipase as a catalyst. A typical known normal method such as dry fractionation (natural fractionation), emulsion fractionation (detergent fractionation), and solvent fractionation is applicable as fractionation.

The fats and oils containing the L2M and the LM2 may be prepared by mixing L2M-containing fats and oils and LM2-containing fats and oils. The L2M-containing fats and oils (fats and oils containing 40 mass% or greater, preferably 60 mass% or greater, of the L2M) or the LM2-containing fats and oils (fats and oils containing 40 mass% or greater, preferably 60 mass% or greater, of the LM2) may be prepared by interesterification of MMM and a lower alcohol ester of L followed by distillation of fatty acid ester and fractionation of the residual fats and oils.

The fats and oils in the chocolate of the present invention contain 0.01 mass% or greater of and less than 5 mass% of the MMM. As long as this condition is satisfied, any raw material of the fats and oils may be used for manufacturing of the chocolate of the present invention. Examples of a usable raw material of the fats and oils can include coconut oil, palm kernel oil, palm oil, fractionated palm oil (palm olein, palm super olein, and the like), shea butter, fractionated shea oil, sal fat, fractionated sal oil, illipe butter, soy bean oil, rapeseed oil, cottonseed oil, safflower oil, sunflower oil, rice oil, corn oil, sesame oil, olive oil, milk fat, and cocoa butter, as well as including an oil mixture and processed fats and oils thereof.

The chocolate of the present invention is chocolate suitable for a non-temper type. The fats and oils in the chocolate of the present invention preferably contain a non-tempered hard butter in addition to the above-described MMM. An outline of typical non-tempered hard butter has been already given in BACKGROUND ART.

The chocolate of the present invention provides significant advantageous effects of the present invention in a case where a non-tempered hard butter containing interesterified fats and oils is used for the fats and oils. Moreover, the use of the non-tempered hard butter containing the interesterified fats and oils can increase a cacao butter content in the chocolate. Thus, the chocolate with favorable flavor is obtained. The above-described interesterified fats and oils may be any of lauric-based interesterified fats and oils and non-lauric-based interesterified fats and oils as long as the content of fatty acid (M) having 6 to 10 carbons accounts for 10 mass% or less (preferably 0 to 5 mass%) in the total constituent fatty acid amount of the interesterified fats and oils.

The above-described lauric-based interesterified fats and oils are interesterified fats and oils containing lauric acid, the content of the lauric acid accounting for 10 mass% or greater (preferably 15 to 60 mass%) in the total constituent fatty acid amount of the interesterified fats and oils. Of the lauric-based interesterified fats and oils, raw material fats and oils for interesterification preferably contain lauric-based fats and oils. The lauric-based fats and oils are fats and oils containing lauric acid, the content of the lauric acid accounting for 30 mass% or greater in the total amount of fatty acid forming the fats and oils. Examples of the lauric-based fats and oils may include coconut oil; palm kernel oil; fractionated oil thereof, such as palm kernel olein or palm kernel stearin; interesterified fats and oils thereof; and hydrogenated oil thereof. One or more kinds selected from these fats and oils may be, as the lauric-based fats and oils, contained in the raw material fats and oils of the lauric-based interesterified fats and oils.

The lauric-based interesterified fats and oils may be fats and oils obtained by interesterification of only the lauric-based fats and oils, or fats and oils obtained by interesterification of a fat-and-oil mixture of the lauric-based fats and oils and non-lauric-based fats and oils. The non-lauric-based fats and oils are fats and oils containing fatty acid of 16 carbons or more, the fatty acid accounting for more than 90 mass% in the total amount of fatty acid forming the fats and oils. Examples may include rapeseed oil, high-erucic-acid rapeseed oil, soy bean oil, corn oil, safflower oil, cottonseed oil, sunflower oil, cacao butter, shea butter, sal fat, palm oil, and hydrogenated fats and oils thereof. One or more kinds selected from these non-lauric-based fats and oils may be used as the raw material fats and oils of the lauric-based interesterified fats and oils.

In a case where the lauric-based interesterified fats and oils are the interesterified fats and oils containing the fat-and-oil mixture of the lauric-based fats and oils and the non-lauric-based fats and oils, a mixture ratio between the lauric-based fats and oils and the non-lauric-based fats and oils is, in terms of a mass ratio, preferably 30:70 to 60:40, more preferably 35:65 to 55:45, and much more preferably 40:60 to 50:50.

The lauric-based interesterified fats and oils contain lauric acid, the content of the lauric acid accounting for 10 mass% or greater (preferably 15 to 60 mass%) in the total amount of constituent fatty acids forming the interesterified fats and oils. When the lauric-based interesterified fats and oils are subjected to interesterification processing, processing such as fractionation or hydrogenation may be performed once before and after the interesterification processing. Alternatively, such processing may be repeated multiple times. The iodine value of the lauric-based interesterified fats and oils is preferably 0 to 40, more preferably 5 to 30, and much more preferably 10 to 25.

The above-described non-lauric-based interesterified fats and oils are interesterified fats and oils containing lauric acid, the content of the lauric acid accounting for less than 10 mass% in the total amount of constituent fatty acids forming the interesterified fats and oils. The content of the lauric acid is preferably 0 to 5 mass%, and more preferably 0 to 2 mass%. Of the non-lauric-based interesterified fats and oils, raw material fats and oils for interesterification preferably contain non-lauric-based fats and oils. The above-mentioned fats and oils can be used as the non-lauric-based fats and oils. One or more kinds of the non-lauric-based fats and oils may be used as the raw material fats and oils of the non-lauric-based interesterified fats and oils.

Raw material fats and oils containing palm-based fats and oils are preferably used as the raw material fats and oils of the non-lauric-based interesterified fats and oils. Any palm-based fats and oils may be used as long as such fats and oils are palm oil or fractionated palm oil. Examples of the palm-based fats and oils may include (1) palm olein and palm stearin as one-stage fractionated oil of palm oil; and (2) palm olein (palm super olein) and plam mid-fraction as fractionated oil (two-stage fractionated oil) obtained by fractionation of palm olein; and (3) palm olein (soft palm) and palm stearin (hard stearin) as fractionated oil (two-stage fractionated oil) obtained by fractionation of palm stearin, and hydrogenated oil thereof. One or more kinds of the palm-based fats and oils may be used as the raw material fats and oils of the non-lauric-based interesterified fats and oils.

In a case where the raw material fats and oils of the non-lauric-based interesterified fats and oils contain the palm-based fats and oils, the content of the palm-based fats and oils in the raw material fats and oils is preferably 20 to 100 mass%, more preferably 40 to 100 mass%, and much more preferably 60 to 100 mass%.

The non-lauric-based interesterified fats and oils contain lauric acid, the content of the lauric acid accounting for less than 10 mass% (preferably 0 to 5 mass%, and more preferably 0 to 2 mass%) in the total amount of constituent fatty acids forming the interesterified fats and oils. When the non-lauric-based interesterified fats and oils are subjected to interesterification processing, processing such as fractionation or hydrogenation may be performed once before and after the interesterification processing. Alternatively, such processing may be repeated multiple times. The iodine value of the non-lauric-based interesterified fats and oils is preferably 10 to 70, more preferably 20 to 55, and much more preferably 25 to 45.

The above-described lauric-based interesterified fats and oils and the non-lauric-based interesterified fats and oils may be each used alone or in combination. Moreover, these interesterified fats and oils may be used in combination with other fats and oils (e.g., lauric acid hard butter, trans acid hard butter, and cocoa butter). The content of the lauric-based interesterified fats and oils and/or the non-lauric-based interesterified fats and oils in the fats and oils of the chocolate of the present invention is preferably 3 to 99.99 mass%, more preferably 30 to 98 mass%, much more preferably 50 to 95 mass%, and most preferably 60 to 90 mass%.

For enhancing the flavor of the chocolate, the chocolate of the present invention preferably contains cocoa butter (cacao butter) in the fats and oils. The content of the cocoa butter in the fats and oils of the chocolate of the present invention is preferably 1 to 40 mass%, more preferably 2 to 35 mass%, much more preferably 4 to 30 mass%, and most preferably 4 to 25 mass%.

The MMM content, the L2M content, and the LM2 content in the fats and oils of the chocolate of the present invention can be, for example, measured in accordance with gas chromatography (JAOCS, vol 70, 11, 1111-1114 (1993)).

For reducing the content of trans fatty acid because of health concerns, the content of the trans fatty acid in the chocolate of the present invention is preferably 0 to 5 mass%, more preferably 0 to 3 mass%, and much more preferably 0 to 1 mass%.

The chocolate of the present invention preferably contains saccharides in addition to the fats and oils. Examples of usable saccharides can include sucrose (sugar and powder sugar), lactose, glucose, fructose, maltose, reduced saccharified starch, liquid sugar, enzymatically converted starch syrup, isomerized liquid sugar, sucrose-combined millet jelly, reducing sugar polydextrose, oligosaccharide, sorbitol, reduced lactose, trehalose, xylose, xylitose, maltitol, erythritol, mannitol, raffinose, dextrin, and the like. The content of the saccharides in the chocolate of the present invention is preferably 20 to 60 mass%, more preferably 25 to 55 mass%, much more preferably 30 to 50 mass%.

In addition to the fats and oils and the saccharides, a raw material commonly blended in chocolate can be used for the chocolate of the present invention. Specific examples of a usable raw material can include dairy products such as whole milk powder and skim milk; cacao components such as cacao mass and cocoa powder; various types of powder such as soy flour, soy protein, processed fruit products, processed vegetable products, green tea powder, and coffee powder; gums; starches; emulsifiers; antioxidants; colorants; and flavors.

The chocolate of the present invention can be manufactured by a typical known method. For example, fats and oils, cacao components, saccharides, dairy products, and emulsifiers can be used as raw materials in manufacturing of the chocolate of the present invention. The chocolate of the present invention can be manufactured through a mixing process, a refining process, a conching process, and a cooling process.

The chocolate of the present invention can be used for all applications of chocolate. For example, a block of chocolate after being cut or removed from a mold is edible as it is. Moreover, the chocolate of the present invention can be used for bread baking products such as bread, cakes, western confectionery, baked confectionery, doughnuts, and cream puffed cakes. The chocolate of the present invention can be, for bread baking products, used as coating materials, filling materials, or chocolate chips to be mixed with dough.

Hard butter suitable for manufacturing of the chocolate of the present invention contains 0.03 to 15 mass% of MMM and 0.03 to 30 mass% of L2M and LM2. The content of the MMM in the hard butter is preferably 0.2 to 10 mass%, and more preferably 0.4 to 6 mass%. The total content of the L2M and the LM2 in the hard butter is preferably 0.2 to 15 mass%, and more preferably 1 to 10 mass%. When the contents of the MMM, the L2M, and the LM2 in the hard butter fall within the above-described ranges, the chocolate using the hard butter of the present invention has excellent luster with less temporal luster deterioration.

The hard butter preferably contains the above-mentioned interesterified fats and oils. The content of the interesterified fats and oils in the hard butter is preferably 20 to 99.94 mass%, more preferably 50 to 99.6 mass%, and much more preferably 60 to 98.6 mass%. When the content of the interesterified fats and oils in the hard butter falls within the above-described range, 10 mass% or greater of cacao butter can be used in the fats and oils of the chocolate using the hard butter The chocolate has more excellent luster with much less temporal luster deterioration.

The hard butter is, in the fats and oils of the chocolate, contained preferably in 3 to 100 mass%, more preferably 30 to 98 mass%, much more preferably 50 to 95 mass%, and most preferably 60 to 90 mass%. Alternatively, the hard butter may be, in the fats and oils of the chocolate, used in 10 to 2000 parts by mass with respect to 100 parts by mass of cocoa butter.

The present invention also provides a chocolate additive suitable for manufacturing of the chocolate of the present invention. The chocolate additive may be fats and oils containing MMM, L2M, and LM2, the chocolate additive containing 2 to 70 mass% of the MMM and 20 to 98 mass% of the L2M and the LM2. The MMM content in the chocolate additive is preferably 4 to 40 mass%, and more preferably 8 to 25 mass%. The total content of the L2M and the LM2 in the chocolate additive of the present invention is preferably 40 to 94 mass%, and more preferably 55 to 88 mass%.

The chocolate additive may be interesterified fats and oils containing fatty acids of 6 to 10 carbons (preferably 8 to 10 carbons) accounting for 25 to 65 mass% of the total amount of the constituent fatty acids and saturated fatty acids of 16 to 24 carbons (preferably 16 to 18 carbons) accounting for 35 to 75 mass% of the total amount of the constituent fatty acids. Of the total amount of the constituent fatty acids of the interesterified fats and oils, the fatty acids of 6 to 10 carbons (preferably 8 to 10 carbons) preferably account for 30 to 60 mass%, and more preferably 35 to 55 mass%. Of the total amount of the constituent fatty acids, the saturated fatty acids of 16 to 24 carbons (preferably 16 to 18 carbons) preferably account for 40 to 70 mass%, and more preferably 45 to 65 mass%. The above-described interesterified fats and oils contain a proper amount of each of the MMM, the L2M, and the LM2, and therefore, can be used as the chocolate additive without change.

The above-described interesterified fats and oils can be manufactured using a typical known method. For example, the above-described interesterified fats and oils may be fats and oils obtained by interesterification of a fat-and-oil mixture of 25 to 65 parts by mass (more preferably 30 to 60 parts by mass) of MMM and 35 to 75 parts by mass (more preferably 40 to 70 parts by mass) of fats and oils having an iodine value of 5 or less and containing, in constituent fatty acids, 90 mass% or greater of saturated fatty acid having 16 carbons or more (for example, fully hydrogenated oil obtained from a raw material such as rapeseed oil, soy bean oil, or palm oil). Alternatively, the interesterified fats and oils may be fats and oils obtained as follows: after a fat-and-oil mixture of MMM and fats and oils (e.g., rapeseed oil, soy bean oil, or palm oil) containing, in constituent fatty acids, 90 mass% or greater of saturated fatty acid having 16 carbons or more has been subjected to interesterification, the resultant is fully hydrogenated. Typical known methods are applicable as hydrogenation reaction and interesterification reaction. The interesterification reaction is applicable to any method of chemical interesterification using a synthetic catalyst such as sodium methoxide and enzymatic interesterification using lipase as a catalyst.

The chocolate additive is, in the fats and oils of the chocolate of the present invention, contained preferably in 0.05 to 15 mass%, more preferably 0.1 to 12.7 mass%, much more preferably 0.2 to 8 mass%, and most preferably 0.4 to 5.5 mass%. The chocolate using the chocolate additive of the present invention has excellent luster with less temporal luster deterioration.

Regarding the above-described L2M and the LM2 in the hard butter and the chocolate additive the mass ratio (L2M/LM2) of the content of the L2M to the content of the LM2 is preferably 0.05 to 4.5, more preferably 0.3 to 3, and much more preferably 0.55 to 2.5. When the L2M/LM2 falls within the above-described range, the chocolate using the hard butter or the chocolate additive has much less temporal luster deterioration.

Next, the present invention will be described with reference to examples. However, the present invention is not limited to these examples.

### [Analysis Method]

The MMM content, the L2M content, and the LM2 content in the fats and oils were measured in accordance with the gas chromatography (JAOCS, vol 70, 11, 1111-1114 (1993)).

The trans fatty acid content in the fats and oils was measured by gas chromatography in accordance with AOCS Celf-96.

For the luster of the chocolate, a gloss value at 8° was measured using a target mask (φ3 mm) by a spectrophotometer (CM-700d manufactured by Konica Minolta, Inc.). A greater gloss value results in better luster of the chocolate.

### [Preparation of MMM]

(MMM-1): MMM was synthesized as (MMM-1), constituent fatty acids thereof being caprylic acid and capric acid and a mass ratio thereof being 3:7.

### [Preparation of L2M-Containing Fats and Oils]

(L2M-1): An amount of 1 mol of tricaprylin and 6 mols of ethyl stearate were mixed together. Subsequently, an interesterified mixture was obtained by interesterification using 1,3-position specific lipase. After the fatty acid ethyl ester was distilled from the interesterified mixture, the solvent was fractionated from the distillation residue. In this manner, (L2M-1) was obtained. In the (L2M-1), the content of S8S (1,3-distearoyl-2-caprylicglycerol) as L2M is 96.8 mass%.

### [Preparation of Fats and Oils Containing L2M and LM2]

(L2M+LM2-1): 86 parts by mass of rapeseed oil and 14 parts by mass of (MMM-1) were mixed together. Subsequently, interesterified fats and oils were obtained by random interesterification using sodiummethylate as a catalyst. After the interesterified fats and oils had been fully hydrogenated, a solvent was fractionated. In this manner, (L2M+LM2-1) was obtained. In (L2M+LM2-1), the total content of the L2M and the LM2 is 95.4 mass%, and the mass ratio (L2M/LM2) of the L2M content to the LM2 content is 4.1.

(L2M+LM2-2): 50 parts by mass of rapeseed oil and 50 parts by mass of (MMM-1) were mixed together. Subsequently, interesterified fats and oils were obtained by random interesterification using sodiummethylate as a catalyst. After the interesterified fats and oils had been fully hydrogenated, a solvent was fractionated. In this manner, (L2M+LM2-2) was obtained. In (L2M+LM2-2), the total content of the L2M and the LM2 is 97.2 mass%, and the mass ratio (L2M/LM2) of the L2M content to the LM2 content is 0.7.

### [Preparation of Fats and Oils Containing MMM, L2M, and LM2]

(MMM+L2M+LM2-1): 50 parts by mass of fully-hydrogenated rapeseed oil and 50 parts by mass of (MMM-1) were mixed together. Subsequently, (MMM+L2M+LM2-1) was obtained by random interesterification using sodiummethylate as a catalyst. In (MMM+L2M+LM2-1), the MMM content is 19.9 mass%, and the total content of the L2M and the LM2 is 74.6 mass%. Moreover, the mass ratio (L2M/LM2) of the L2M content to the LM2 content is 0.7.

### [Preparation of Interesterified Fats and Oils]

(Non-lauric-based Interesterified Fats and Oils - 1): 8.8 parts by mass of high-oleic sunflower oil, 48.4 parts by mass of palm stearin (an iodine value of 36), 18.8 parts by mass of fully-hydrogenated soy bean oil, and 24.0 parts by mass of palm oil were mixed together. Interesterified fats and oils were obtained in such a manner that the resultant oil mixture (a palmitic acid content of 40.9 mass%, a stearic acid content of 20.0 mass%, an oleic acid content of 30.6 mass%, a linolic acid content of 6.3 mass%, a linolenic acid content of 0.2 mass%, and a trans-type fatty acid content of 0 mass%) is randomly interesterified using sodiummethylate as a catalyst. The resultant interesterified fats and oils were subjected to dry fractionation at 36 to 38°C, and therefore, a high melting point component was removed. In this manner, a low melting point component was obtained. The resultant low melting point component was fractionated using acetone at 0 to 2°C, and therefore, a low melting point component was removed. In this manner, a high melting point component (an iodine value of 32) was obtained. The resultant high melting point component was used as (Non-lauric-based Interesterified Fats and Oils - 1).

(Lauric-based Interesterified Fats and Oils - 1): 15 parts by mass of palm stearin (an iodine value of 15), 35 parts by mass of an intermediate melting point fraction of palm oil (an iodine value of 45), and 50 parts by mass of fully-hydrogenated palm kernel oil were mixed together. Interesterified fats and oils were obtained in such a manner that the resultant oil mixture (a lauric acid content of 21.4 mass% and a trans fatty acid content of 0 mass%) is randomly interesterified using sodiummethylate as a catalyst. The resultant interesterified fats and oils were used as (Lauric-based Interesterified Fats and Oils - 1).

### [First Chocolate Preparation]

According to compositions of Tables 1 and 2, chocolate according to a first comparative example and first to eighth examples were prepared. That is, according to a common procedure, mixing, refining, and conching were performed. After conching, the chocolate in a melted liquid state was applied to a mold, and then, was cooled and solidified. In this manner, the chocolate in a plate shape was obtained. The luster of a surface of each resultant chocolate was visually evaluated in accordance with the following evaluation criteria right after manufacturing and after two-month storage at 20°C. Moreover, the gloss value was measured using the spectrophotometer. Results are shown in Tables 1 and 2.

Luster Evaluation Criteria
Excellent: Excellent Luster
Good: Good Luster
Moderate: Moderate Luster
Slight: Slight Dullness
Poor: Lusterless

**[Table 1]**

| [Table 1] Chocolate Composition and Luster Evaluation | | | | | | |
|---|---|---|---|---|---|---|
| | | First Comparative Example | First Example | Second Example | Third Example | Fourth Example |
| Raw Material Composition (mass%) | | | | | | |
| Cacao Mass | | 14.43 | 14.43 | 14.43 | 14.43 | 14.43 |
| Cocoa Powder | | 0.57 | 0.57 | 0.57 | 0.57 | 0.57 |
| MMM-1 | | - | 0.2 | 0.2 | 0.2 | 0.2 |
| L2M-1 | | - | - | 0.8 | - | - |
| L2M+LM2-1 | | - | - | - | 0.8 | - |
| L2M+LM2-2 | | - | - | - | - | 0.8 |
| Non-lauric-based Interesterified Fats and Oils - 1 | | 32.0 | 31.8 | 31.0 | 31.0 | 31.0 |
| Lactose | | 10.0 | 10.0 | 10.0 | 10.0 | 10.0 |
| Sugar | | 42.45 | 42.45 | 42.45 | 42.45 | 42.45 |
| Emulsifier | | 0.5 | 0.5 | 0.5 | 0.5 | 0.5 |
| Flavor | | 0.05 | 0.05 | 0.05 | 0.05 | 0.05 |
| Total | | 100 | 100 | 100 | 100 | 100 |
| Trans Fatty Acid Content (mass%) in Chocolate | | less than 1 | less than 1 | less than 1 | less than 1 | less than 1 |
| Fat-and-Oil Content (mass%) in Chocolate | | 40.0 | 40.0 | 40.0 | 40.0 | 40.0 |
| MMM (mass%) in Fats and Oils of Chocolate | | - | 0.5 | 0.5 | 0.5 | 0.5 |
| L2M+LM2 (mass%) | | - | - | 1.9 | 1.9 | 1.9 |
| L2M/LM2 | | - | - | - | 4.1 | 0.7 |
| Interesterified Fats and Oils (mass%) | | 80.0 | 79.5 | 77.5 | 77.5 | 77.5 |
| Chocolate Luster | | | | | | |
| Visual Check | Right After Manufacturing | Moderate | Excellent | Excellent | Excellent | Excellent |
| | After Two Months | Poor | Moderate | Moderate | Good | Excellent |
| Gloss Value | Right After Manufacturing | 20 | 36 | 36 | 38 | 40 |
| | After Two Months | 22 | 25 | 29 | 35 | 40 |

**[Table 2]**

| [Table 2] Chocolate Composition and Luster Evaluation | | | | | |
|---|---|---|---|---|---|
| | | Fifth Example | Sixth Example | Seventh Example | Eighth Example |
| Raw Material Composition (mass%) | | | | | |
| Cacao Mass | | 14.43 | 14.43 | 14.43 | 14.43 |
| Cocoa Powder | | 0.57 | 0.57 | 0.57 | 0.57 |
| MMM-1 | | 1.0 | 0.05 | 0.2 | 0.05 |
| L2M-1 | | - | - | - | - |
| L2M+LM2-1 | | - | - | - | - |
| L2M+LM2-2 | | - | 0.8 | 0.2 | 1.6 |
| Non-lauric-based Interesterified Fats and Oils - 1 | | 31.0 | 31.15 | 31.6 | 30.35 |
| Lactose | | 10.0 | 10.0 | 10.0 | 10.0 |
| Sugar | | 42.45 | 42.45 | 42.45 | 42.45 |
| Emulsifier | | 0.5 | 0.5 | 0.5 | 0.5 |
| Flavor | | 0.05 | 0.05 | 0.05 | 0.05 |
| Total | | 100 | 100 | 100 | 100 |
| Trans Fatty Acid Content (mass%) in Chocolate | | less than 1 | less than 1 | less than 1 | less than 1 |
| Fat-and-Oil Content (mass%) in Chocolate | | 40.0 | 40.0 | 40.0 | 40.0 |
| MMM (mass%) in Fats and Oils of Chocolate | | 2.5 | 0.13 | 0.5 | 0.13 |
| L2M+LM2 (mass%) | | - | 1.9 | 0.49 | 3.9 |
| L2M/LM2 | | - | 0.7 | 0.7 | 0.7 |
| Interesterified Fats and Oils (mass%) | | 77.5 | 77.9 | 77.5 | 75.9 |
| Chocolate Luster | | | | | |
| Visual Check | Right After Manufacturing | Excellent | Good | Excellent | Excellent |
| | After Two Months | Good | Good | Good | Excellent |
| Gloss Value | Right After Manufacturing | 38 | 33 | 38 | 36 |
| | After Two Months | 32 | 31 | 34 | 36 |

### [Preparation of Hard Butter (not according to the invention) and Chocolate]

Hard butter A was obtained in such a manner that 3.0 parts by mass of (MMM-1) and 3.0 parts by mass of (L2M+LM2-1) are mixed with 94 parts by mass of (Non-lauric-based Interesterified Fats and Oils - 1). A composition of the hard butter A is shown in Table 3.

Moreover, hard butter B was obtained in such a manner that 3.0 parts by mass of (MMM+L2M+LM2-1) is mixed with 97 parts by mass of (Non-lauric-based Interesterified Fats and Oils - 1). A composition of the hard butter B is shown in Table 3.

According to compositions of Table 3, chocolate according to ninth to tenth examples was prepared. That is, according to a common procedure, mixing, refining, and conching were performed. After conching, the chocolate in a melted liquid state was applied to a mold, and then, was cooled and solidified. In this manner, the chocolate in a plate shape was obtained. The luster of a surface of each resultant chocolate was visually evaluated in accordance with the same evaluation criteria as in [First Chocolate Preparation] right after manufacturing and after two-month storage at 20°C. Moreover, the gloss value was measured using the spectrophotometer. Results are shown in Table 3.

**[Table 3]**

| [Table 3] Hard Butter Composition, Chocolate Composition, and Luster Evaluation | | | |
|---|---|---|---|
| | | Ninth Example | Tenth Example |
| Hard Butter | | A | B |
| MMM (mass%) | | 3.0 | 0.6 |
| L2M+LM2 (mass%) | | 2.9 | 2.2 |
| L2M/LM2 | | 4.1 | 0.7 |
| Interesterified Fats and Oils (mass%) | | 94.0 | 97.0 |
| Raw Material Composition (mass%) in Chocolate | | | |
| Cacao Mass | | 14.43 | 14.43 |
| Cocoa Powder | | 0.57 | 0.57 |
| Hard Butter | | 32.0 | 32.0 |
| Lactose | | 10.0 | 10.0 |
| Sugar | | 42.45 | 42.45 |
| Emulsifier | | 0.5 | 0.5 |
| Flavor | | 0.05 | 0.05 |
| Total | | 100 | 100 |
| Trans Fatty Acid Content (mass%) in Chocolate | | less than 1 | less than 1 |
| Fat-and-Oil Content (mass%) in Chocolate | | 40.0 | 40.0 |
| MMM (mass%) in Fats and Oils of Chocolate | | 1.2 | 0.48 |
| L2M+LM2 (mass%) | | 1.2 | 1.8 |
| L2M/LM2 | | 4.1 | 0.7 |
| Interesterified Fats and Oils (mass%) | | 75.2 | 77.6 |
| Chocolate Luster | | | |
| Visual Check | Right After Manufacturing | Excellent | Excellent |
| | After Two Months | Excellent | Excellent |
| Gloss Value | Right After Manufacturing | 46 | 41 |
| | After Two Months | 40 | 40 |

### [Chocolate Additive] (not according to the invention)

Triacylglycerol can be used as the chocolate additive, the triacylglycerol being obtained in such a manner that the MMM, the L2M-containing fats and oils, and the fats and oils containing the L2M and the LM2 as used in the above-described first to ninth examples are mixed in advance at each blending ratio of the first to ninth examples. A composition of each mixture in the case of using triacylglycerol of the first to ninth examples as the chocolate additive is shown in Tables 4 and 5. Note that (MMM+L2M+LM2-1) (the MMM content is 19.9 mass%, the total content of the L2M and the LM2 is 74.6 mass%, and the mass ratio (L2M/LM2) of the L2M content to the LM2 content is 0.7) blended with the hard butter in the tenth example itself is the chocolate additive of the present invention.

**[Table 4]**

| [Table 4] Chocolate Additive Composition | | | | | |
|---|---|---|---|---|---|
| | First Example | Second Example | Third Example | Fourth Example | Fifth Example |
| Composition Ratio (mass%) of Chocolate Additive | | | | | |
| MMM-1 | 100 | 20 | 20 | 20 | 100 |
| L2M-1 | | 80 | | | |
| L2M+LM2-1 | | | 80 | | |
| L2M+LM2-2 | | | | 80 | |
| Total | 100 | 100 | 100 | 100 | 100 |
| MMM (mass%) in Chocolate Additive | 100 | 20.0 | 20.0 | 20.0 | 100 |
| L2M+LM2 (mass%) | 0 | 77.4 | 76.3 | 77.8 | 0 |
| L2M/LM2 | - | - | 4.1 | 0.7 | - |

**[Table 5]**

| [Table 5] Chocolate Additive Composition | | | | |
|---|---|---|---|---|
| | Sixth Example | Seventh Example | Eighth Example | Ninth Example |
| Composition Ratio (mass%) of Chocolate Additive | | | | |
| MMM-1 | 5.9 | 50 | 3 | 50 |
| L2M-1 | | | | |
| L2M+LM2-1 | | | | 50 |
| L2M+LM2-2 | 94.1 | 50 | 97 | |
| Total | 100 | 100 | 100 | 100 |
| MMM (mass%) in Chocolate Additive | 5.9 | 50 | 3.0 | 50 |
| L2M+LM2 (mass%) | 91.5 | 48.6 | 94.3 | 47.7 |
| L2M/LM2 | 0.7 | 0.7 | 0.7 | 4.1 |

### [Second Chocolate Preparation]

According to compositions of Table 6, chocolate according to second to third comparative examples and eleventh to twelfth examples was prepared. That is, according to a common procedure, mixing, refining, and conching were performed. After conching, the chocolate in a melted liquid state was applied to a mold, and then, was cooled and solidified. In this manner, the chocolate in a plate shape was obtained. The luster of a surface of each resultant chocolate was visually evaluated in accordance with the same evaluation criteria as in [First Chocolate Preparation] right after manufacturing and after two-month storage at 20°C. Moreover, the gloss value was measured using the spectrophotometer. Results are shown in Table 6.

**[Table 6]**

| [Table 6] Chocolate Composition and Luster Evaluation | | | | | |
|---|---|---|---|---|---|
| | | Second Comparative Example | Tenth Example | Third Comparative Example | Eleventh Example |
| Raw Material Composition (mass%) | | | | | |
| Cacao Mass | | 6.36 | 6.36 | 5.82 | 5.82 |
| Cocoa Powder | | 4.57 | 4.57 | 9.10 | 9.10 |
| MMM+L2M+LM2-1 | | - | 4.66 | - | 1.75 |
| FHPKS (*1) | | 36.0 | 31.34 | - | - |
| Lauric-based Interesterified Fats and Oils - 1 | | - | - | 30.8 | 29.05 |
| Skim Milk | | - | - | 8.0 | 8.0 |
| Lactose | | 10.0 | 10.0 | 5.0 | 5.0 |
| Sugar | | 42.62 | 42.62 | 40.83 | 40.83 |
| Emulsifier | | 0.4 | 0.4 | 0.4 | 0.4 |
| Flavor | | 0.05 | 0.05 | 0.05 | 0.05 |
| Total | | 100 | 100 | 100 | 100 |
| Trans Fatty Acid Content (mass%) in Chocolate | | less than 1 | less than 1 | less than 1 | less than 1 |
| Fat-and-Oil Content (mass%) in Chocolate | | 40.0 | 40.0 | 35.0 | 35.0 |
| MMM (mass%) in Fats and Oils of Chocolate | | - | 2.3 | - | 1.0 |
| L2M+LM2 (mass%) | | 0.5 | 9.2 | 2.1 | 5.7 |
| L2M/LM2 | | 2.0 | 0.7 | 10.4 | 1.4 |
| Interesterified Fats and Oils (mass%) | | - | - | 88.0 | 83.0 |
| Chocolate Luster | | | | | |
| Visual Check | Right After Manufacturing | Excellent | Excellent | Moderate | Good |
| | After Two Months | Poor (*2) | Excellent | Moderate | Good |
| Gloss Value | Right After Manufacturing | 47 | 52 | 22 | 28 |
| | After Two Months | 28 (*2) | 48 | 18 | 24 |

## Claims

1. Non-tempered chocolate comprising:
a MMM, a content of which is 0.01 mass% or greater and less than 5 mass% in fats and oils of the chocolate, wherein
the M means a fatty acid of 6 to 10 carbons, and
the MMM means a triacylglycerol having the three M molecules bonded to a single glycerol molecule, **characterized in that**
a total content of L2M and LM2 in the fats and oils is 0.01 to 10 mass%,
the L means a saturated fatty acid of 16 to 24 carbons,
the L2M means a triacylglycerol having the two L molecules and the single M molecule, the molecules being bonded to a single glycerol molecule, and
the LM2 means a triacylglycerol having the single L molecule and the two M molecules, the molecules being bonded to a single glycerol molecule, wherein a mass ratio (L2M/LM2) of a content of the L2M in the fats and oils to a content of the LM2 in the fats and oils is 0.05 to 4.5 and wherein content of trans fatty acid in the non-tempered chocolate is 0 to 1 mass%.

2. The non-tempered chocolate according to claim 1, wherein the fats and oils contain interesterified fats and oils.

3. The non-tempered chocolate according to claim 1 or 2, further comprising a chocolate additive comprising:
2 to 70 mass% of MMM; and
20 to 98 mass% of L2M and LM2.

4. The non-tempered chocolate according to claim 3, wherein the chocolate additive contains interesterified fats and oils contain constituent fatty acids; and of a total amount of the constituent fatty acids, fatty acids of 6 to 10 carbons account for 25 to 65 mass%, and saturated fatty acids of 16 to 24 carbons account for 35 to 75 mass%.

## Patentansprüche

1. Ungehärtete Schokolade, umfassend:
ein MMM, dessen Gehalt 0,01 Massen-% oder mehr und weniger als 5 Massen-% an Fetten und Ölen der Schokolade beträgt, wobei
das M eine Fettsäure mit 6 bis 10 Kohlenstoffatomen bezeichnet und
das MMM ein Triacylglycerin mit den drei M-Molekülen bezeichnet, die an ein einzelnes Glycerinmolekül gebunden sind, **dadurch gekennzeichnet, dass**
ein Gesamtgehalt an L2M und LM2 in den Fetten und Ölen 0,01 bis 10 Massen-% beträgt, L eine gesättigte Fettsäure mit 16 bis 24 Kohlenstoffatomen bezeichnet, L2M ein Triacylglycerin bezeichnet, das die beiden L-Moleküle und das einzelne M-Molekül aufweist, wobei die Moleküle an ein einzelnes Glycerinmolekül gebunden sind, und
das LM2 ein Triacylglycerin mit dem einzelnen L-Molekül und den zwei M-Molekülen bezeichnet, wobei die Moleküle an ein einzelnes Glycerinmolekül gebunden sind, wobei ein Massenverhältnis (L2M/LM2) eines Gehalts des L2M in den Fetten und Ölen zu einem Gehalt des LM2 in den Fetten und Ölen 0,05 bis 4,5 beträgt und wobei der Gehalt an trans-Fettsäure in der ungehärteten Schokolade 0 bis 1 Massen-% beträgt.

2. Ungehärtete Schokolade nach Anspruch 1, wobei die Fette und Öle umgeesterte Fette und Öle enthalten.

3. Ungehärtete Schokolade nach Anspruch 1 oder 2, ferner umfassend ein Schokoladenadditiv, umfassend:
2 bis 70 Massen-% MMM; und
20 bis 98 Massen-% L2M und LM2.

4. Ungehärtete Schokolade nach Anspruch 3, wobei das Schokoladenadditiv umgeesterte Fette enthält und Öle Fettsäurebestandteile enthalten; und von einer Gesamtmenge der Fettsäurebestandteile Fettsäuren mit 6 bis 10 Kohlenstoffatomen 25 bis 65 Massen-% ausmachen und gesättigte Fettsäuren mit 16 bis 24 Kohlenstoffatomen 35 bis 75 Massen-% ausmachen.

## Revendications

1. Chocolat de type non tempéré comprenant :
un MMM dont la teneur est supérieure ou égale à 0,01 % en masse et inférieure à 5 % en masse dans les graisses et les huiles du chocolat,
M désignant un acide gras ayant 6 à 10 atomes de carbone et
MMM désignant un triacylglycérol dont les trois molécules M sont liées à une molécule de glycérol unique, **caractérisé en ce qu'**
une teneur totale en L2M et LM2 dans les graisses et les huiles est de 0,01 à 10 % en masse, L désigne un acide gras saturé ayant 16 à 24 atomes de carbone, L2M désigne un triacylglycérol comprenant les deux molécules L et la molécule M unique, les molécules étant liées à une molécule de glycérol unique et
LM2 désigne un triacylglycérol comprenant la molécule L unique et les deux molécules M, les molécules étant liées à une molécule de glycérol unique, un rapport massique (L2M/LM2) d'une teneur en L2M dans les graisses et les huiles à la teneur en LM2 dans les graisses et les huiles étant de 0,05 à 4,5 et la teneur en acide gras trans dans le chocolat non tempéré étant de 0 à 1 % en masse.

2. Chocolat non tempéré selon la revendication 1, dans lequel les graisses et les huiles contiennent des graisses et des huiles interestérifiées.

3. Chocolat non tempéré selon la revendication 1 ou 2, comprenant en outre un additif pour chocolat comprenant :
2 à 70 % en masse de MMM ; et
20 à 98 % en masse de L2M et de LM2.

4. Chocolat non tempéré selon la revendication 3, dans lequel l'additif pour chocolat contient des graisses interestérifiées et les huiles contiennent des acides gras constitutifs ; et dans une quantité totale des acides gras constitutifs, les acides gras ayant 6 à 10 atomes de carbone représentent 25 à 65 % en masse et les acides gras saturés ayant 16 à 24 atomes de carbone représentent 35 à 75 % en masse.
